# EUROPÄISCHE PATENTSCHRIFT

(11) **EP 0 998 882 B1**
(45) Veröffentlichungstag und Bekanntmachung des Hinweises auf die Patenterteilung: **07.12.2005**
(21) Anmeldenummer: 99120898.4
(22) Anmeldetag: 28.10.1999
(51) Int. Cl.: A61C 13/083

(54) **Verfahren zur Herstellung von Zahnersatz**
Method for manufacturing dental prostheses
Procédé de fabrication de prothèses dentaires

(30) Priorität: 02.11.1998 DE 19850451
(43) Veröffentlichungstag der Anmeldung: 10.05.2000
(73) Patentinhaber: Ivoclar Vivadent AG, 9494 Schaan (LI)
(72) Erfinder: Ubassy, Gérald, F-30650 Rochefort du Gard (FR); Foser Hans-Peter, FL 9496 Balzers (LI)
(74) Vertreter: Baronetzky, Klaus

(56) Entgegenhaltungen:
- DE-A- 3 604 059
- US-A- 4 473 353
- US-A- 4 813 874
- US-A- 4 879 136
- US-A- 5 346 397

## Beschreibung

Die Erfindung betrifft ein Verfahren zur Herstellung von Zahnersatz gemäß dem Oberbegriff von Anspruch 1 sowie einen Zahnersatz gemäß dem Oberbegriff von Anspruch 19.

Ein derartiges Verfahren und ein derartiger Zahnersatz sind aus der DE-OS 36 04 059 bekannt. Bei einer Krone gemäß dieser Vorveröffentlichung wird eine Hohlkappe industriell vorgefertigt und über eine mineralische Dentin-Ersatzmasse auf einen Zahnstumpf, also ein Zahnstumpfmodell, aufgebracht. Der durch Aufdrücken entstehende Überschuß wird entfernt bzw. modelliert und dann gebrannt. Diese Lösung greift auf die bereits länger bekannte Porzellan-Hohlkrone zurück, die über Zahnzement mit dem Zahnstumpfmodell verbunden wurde und sieht anstelle dessen die Verwendung von mineralischer Dentin-Ersatzmasse für die Verbindung zwischen der Hohlkappe und dem Zahnstumpf vor. Hierdurch soll die Schichtstärke der Hohlkappe reduziert und die Ästhetik verbessert werden können.

Die Herstellung von Hohlkappen gemäß der DE-OS 36 04 059 hat sich jedoch als schwierig und in der Praxis nachteilig herausgestellt. Es muß stets eine Vielzahl von Hohlkappen entsprechend der Farbe, Form und Größe des erwünschten Zahnersatzes vorgefertigt und bereitgehalten werden, so daß ein aufwendiges Hohlkappenlager vorgehalten werden muß. Trotz dieses Auswands ist das ästhetische Ergebnis eher unbefriedigend, denn die äußere Form des Ersatzzahnes entspricht regelmäßig einem Standardergebnis; die Farbgebung kann der Differenzierung des natürlichen Zahns meistens nicht folgen, auch wenn beispielsweise ein Lager von 100 unterschiedlichen Hohlkappen vorgehalten wird, wie es für fünf unterschiedliche Farbgebungen und fünf unterschiedliche Formen für vier unterschiedliche Frontzähne erforderlich ist.

Demgegenüber haben Prefacetten den wesentlichen Vorteil, daß die Formgebung einer Zahnrestauration individuell hergestellt werden kann, während sie bei Hohlklappen mehr oder weniger vorgegeben ist.

Nachdem sich diese Lösung nicht durchgesetzt hat, werden heutzutage meist mehrere Keramikschichten auf ein Gerüst oder ein Zahnstumpfmodell nacheinander aufgetragen, um eine individualisierte und dem Erscheinungsbild eines natürlichen Zahns nachempfundene Ästhetik zu ermöglichen. Die Schichten können hierbei auch im Labor nach einem Abdruck hergestellt werden, wie es beispielsweise aus der US-PS 44 73 353 bekannt ist, die eine entsprechende Schicht mit einem Acrylkleber aufklebt, nachdem ein entsprechender Abdruck hergestellt worden ist.

Eine ähnliche aufgeklebte Hohlkappe ist aus der US-PS 48 13874 bekannt. Auch hier erfolgt ein Abformen, jedoch keine Vorfertigung, so daß der Arbeitsaufwand vergleichsweise groß ist.

Aufgabe der vorliegenden Erfindung ist es, ausgehend von DE-OS 36 04 059, ein Verfahren zur Herstellung von Zahnersatz gemäß dem Oberbegriff von Anspruch 1 sowie einen Zahnersatz gemäß dem Oberbegriff von Anspruch 19 zu schaffen, die ein ästhetisch ansprechendes Restaurationsergebnis bieten, das dennoch preisgünstig und rasch herzustellen ist.

Diese Aufgabe wird in überraschend einfacher Weise durch den Gegenstand des nunmehr geltenden Verfahrensanspruches 1 sowie des neuen Anspruchs 19 gelöst.

Ein wesentlicher Punkt der Erfindung liegt darin, das Keramik-Formteil in eine auf der Labial- oder Buccalseite des Gerüstes oder Zahnstumpf-Modells im Überschuss aufgebrachte, ungebrannte keramische Masse derart einzudrücken, dass die keramische Masse das Keramik-Formteil mindestens teilweise umhüllt. Anschließend wird das Keramik-Formteil zusammen mit dem Gerüst oder Zahnstumpf-Modell gebrannt.

Durch diese Lösung lässt sich sicherstellen, dass die Individualisierung, wie sie durch die Modellierung und Farbgebung von keramischer Masse möglich ist, trotzt der Vorfertigung realisierbar ist. Andererseits ist es nicht mehr erforderlich, mehrere Schichten nacheinander aufzubringen und separat zu brennen, so dass der Arbeitsanfall im Labor stark reduziert wird.

Das Keramik-Formteil ist von einer wenigstens einschichtigen, gebrannten Prefacette gebildet.

In diesem Zusammenhang besonders günstig ist es, wenn eine ein- bzw. mehrschichtige, vorzugsweise zweischichtige, Prefacette verwendet wird. Diese ist der Transluzenz des natürlichen Zahns nachempfunden, und von außen teilweise sichtbar, nachdem sie mindestens teilweise von keramischer Masse umhüllt ist. Damit kann auf der sichtbaren Labial- oder Buccalseite, die regelmäßig eine bauchige Außenform erfordert, die für ein ästhetisch befriedigendes Ergebnis regelmäßig erforderliche Schichttechnik stark vereinfacht bzw. durch Aufbringen der vorgefertigen Prefacette abgelöst werden. Es versteht sich, daß grundsätzlich eine entsprechende Prefacette auch auf der Lingualseite eingesetzt werden könnte, wobei jedoch zum einen regelmäßig die ästhetischen Ansprüche dort geringer sind, und zum anderen die Außenform im Backenzahnbereich nur leicht konvex und im Frontzahnbereich sogar konkav ist, so daß weniger Masse erforderlich ist.

Erfindungsgemäß ist es vorgesehen, das Gerüst, das aus einer Metalllegierung besteht, oder das Zahnstumpfmodell mit einem Opaker zu verkleiden und diesen aufzubrennen. Der Opaker hat eine höhere Schmelztemperatur als die Prefacette und als die keramische Masse, so daß er auch bei der für diese erforderlichen Brenntemperatur fest bleibt.

Auf den Opaker, der eine gut haftende Oberfläche aufweist, wird die keramische Masse im Überschuß aufgebracht und dann auf der Labial- bzw. Buccalseite die Prefacette auf- bzw. eingedrückt. Auf diese wird dann erneut die gleiche keramische Masse aufgebracht und modelliert, wobei dieses weitere Aufbringen bereits dem Aufbringen der letzten Schicht bei der Schichttechnik entspricht.

Die fertig modellierte Restauration wird dann gebrannt. Dementsprechend läßt sich durch dieses erfindungsgemäße Verfahren das Herstellen und einzelne Brennen der ersten, zweiten und dritten Schicht mit lediglich einem Brand nachbilden.

Es versteht sich, daß es günstig sein kann, in Maltechnik in üblicher Weise, also wie es auch bei der Schichttechnik regelmäßig vollzogen wird, die Farbgebung zu individualisieren und dann einen weiteren Brand vorzunehmen.

Erfindungsgemäß ist es besonders günstig, daß die verwendeten Keramikmaterialien sowohl für die keramische Masse als auch für die Prefacette kompatibel sind. Dementsprechend besteht kaum ein oder kein Unterschied im Wärmeausdehnungskoeffizienten von Prefacette und keramischer Masse, so daß eine Rißbildung nicht zu befürchten ist.

Auch muß der Zahntechniker für die Verwendung der erfindungsgemäßen Prefacette nicht besonders geschult werden; nachdem das Aufbringen von einzelnen Schichten, wie es bislang üblich ist, meist erheblich mehr Erfahrung erfordert, läßt sich das erfindungsgemäße Verfahren auch von weniger erfahrenen Zahntechnikern gut beherrschen, was der Qualität des Restaurationsergebnisses sehr zugute kommt.

Erfindungsgemäß ist es besonders günstig, daß die Keramikschale in zwei oder mehreren Schichten industriell vorgefertigt werden kann. Es müssen hier nur wenige Exemplare, beispielsweise je drei für den Frontzahn- und den Backenzahnbereich, vorfabriziert werden, wobei diese Keramikschalen anatomisch und ästhetisch derart in die Keramikmasse integriert werden, daß nach dem Brand ein Übergang zwischen gebrannter Keramikmasse und vorgefertigter Keramikschale nicht mehr zu erkennen ist. Die Keramikschale ist erfindungsgemäß teilweise von Keramikmasse umhüllt und insofern in den dentalen Gerüstaufbau integriert. Ihre Oberfläche ist bevorzugt so beschaffen, daß die umgebende Keramikmasse gut haftet, was der Festigkeit der Gesamtrestauration zugute kommt.

Bei einer Brenntemperatur zwischen 660 und 950°C lassen sich die Keramikmassen zusammen mit den Keramikschalen gut brennen, so daß keine besonderen Anforderungen an den zu verwendenden Keramikofen gestellt werden; vielmehr können die üblichen, für die Herstellung von Metallkeramiken verwendeten Öfen verwendet werden.

Weitere Einzelheiten, Vorteile und Merkmale der Erfindung ergeben sich aus der nachstehenden Beschreibung eines Ausführungsbeispiels anhand der Zeichnung.

Es zeigen:
- Fig. 1: eine schematische Ansicht einer Ausführungsform einer erfindungsgemäßen Prefacette von der Labialseite aus betrachtet;
- Fig. 2: die Prefacette gemäß Fig. 1, von der Lingualseite aus betrachtet;
- Fig. 3: einen Schnitt durch die Ausführungsform gemäß Figur 1, entlang der Linie III-III aus Fig. 1; und
- Fig. 4: die Aufbringung von erfindungsgemäßen Prefacetten auf Gerüste, in der Darstellung von der Inzisalseite aus betrachtet.

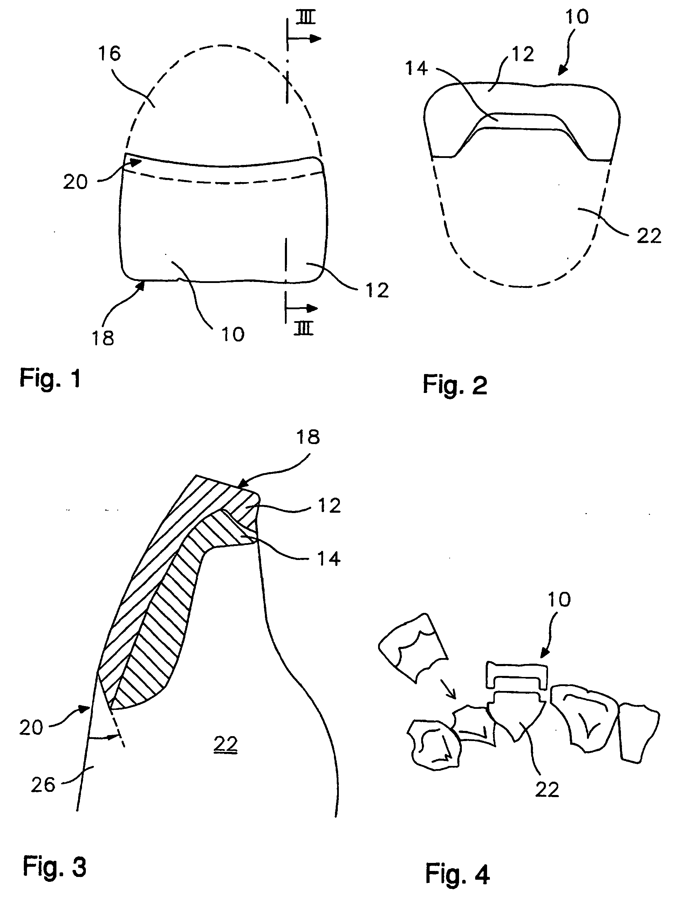

Die in Fig. 1 dargestellte Prefacette 10 ist in dem dargestellten Ausführungsbeispiel zweischichtig aufgebaut. Eine der Labialseite zugewandte Schicht 12 besteht aus Schneidenmaterial, während eine der Lingualseite zugewandte Schicht 14 aus Dentinmaterial besteht. Das dargestellte Ausführungsbeispiel bezieht sich auf eine Prefacette für einen oberen Frontzahn 16, während es sich versteht, daß entsprechende Prefacetten beispielsweise auch bei Prämolaren oder gegebenenfalls Molaren zum Einsatz gelangen können.

Die Prefacette 10 deckt - wie aus Fig. 1 ersichtlich - nahezu den gesamten sichtbaren Bereich des Frontzahns 16 labial ab. Im Übergangsbereich 20 zwischen Gerüst und Prefacette ist die Prefacette von Keramikmasse verblendet, so daß der Anschluß praktisch nicht sichtbar ist.

Aus Fig. 2 ist ersichtlich, daß die dem Dentin entsprechende Keramikmasse der Schicht 14 vollständig von der dem Zahnschneidenmaterial entsprechenden Keramikmasse, die als Schicht 12 aufgebracht ist, umgeben ist. Auch aus lingualer Ansicht betrachtet ist der Inzisalbereich von der Prefacette abgedeckt, während das in der Regel mit Opaker abgedeckte Metallgerüst 22 lingualseitig nicht mit einer Prefacette ausgestattet sein muß.

Die Ausgestaltung der Prefacette und der Anschluß an das Metallgerüst 22 ist aus Fig. 3 besonders gut ersichtlich. Die Schicht 12 verläuft von der Inzisalfläche 18 ausgehend der Krümmung eines natürlichen Zahnes folgend in Zahnwurzelrichtung und endet im Übergangsbereich 20 spitz zulaufend. Dort ist die Schicht 12 von Keramikmasse 26 abgedeckt, wobei die Überlappung sich über einen Bereich von etwas weniger als 1 Millimeter erstreckt. Der Überlappungswinkel beträgt 15 bis 75°, bevorzugt 20° bis 45° und vorzugsweise 30°.

Zwischen Gerüst 22 und Schicht 12 erstreckt sich die Schicht 14 aus Keramikmasse, die die Transluzenz von Dentin nachbildet. Diese Schicht ist dem Übergangsbereich 20 benachbart etwas dicker und verläuft dann bis zur Lingualseite hin über das Gerüst 22 hinweg.

Zur Herstellung einer erfindungsgemäßen Restauration wird zunächst das Metallgerüst 22 aus einer Edelmetalllegierung mit den üblichen Kriterien hergestellt. Auf die Metallkrone wird ein Keramikopaker aufgebrannt, der die Metallfarbe abdeckt und das Gerüst auf der Oberseite und den Seitenflächen vollständig umhüllt. Anschließend wird auf den Opaker Keramikmasse nach den üblichen Methoden aufgebracht, jedoch noch nicht aufgebrannt. Eine zweischichtige, transluzente Keramikschale oder Prefacette wird in die Keramikmasse gedrückt. Dieses Zwischenprodukt wird dann mit einem Vorwall aus Silicon positioniert, und die Prefacette wird zusammen mit der Keramikmasse zu einer fertigen Krone ausgearbeitet.

Der Vorwall wird entfernt und die Krone wird gebrannt. Die gebrannte Krone wird ausgearbeitet und gegebenenfalls werden mit Keramik Korrekturen angebracht, bevor nochmals gebrannt wird. Nach Fertigstellung der Krone durch Beschleifen wird die Glasur aufgebracht und eingebrannt.

Die Krone hat eine zahnähnliche Transluzenz, und, obwohl die Prefacette nicht vollständig von Keramikmasse umgeben ist, ist sie mit bloßem Auge nicht zu erkennen.

In diesem Zusammenhang ist es besonders günstig, wenn der Übergangsbereich in der beschriebenen Weise angeschrägt ist; durch die richtige Wahl des Übergangswinkels kann verhindert werden, daß durch die Lichtbrechung die gebrannte Keramikmasse durch die untere Kante der Prefacette hindurch ersichtlich ist.

Aus Fig. 4 ist ersichtlich, in welcher Weise die Prefacetten auf die Gerüste aufgebracht werden können. Sie können klammerartig die Prefacetten von der Labialseite aus umklammern, wobei eine derartige Umklammerung den Formschluß und damit die Stabilität der Verankerung verbessert.

## Patentansprüche

1. Verfahren zur Herstellung von Zahnersatz, bei welchem ein Keramik-Formteil (10) über eine keramische Masse (26) auf ein Gerüst oder ein Zahnstumpf-Modell (22) aufgebracht wird,
**dadurch gekennzeichnet, dass**
das Keramik-Formteil (10) in eine auf der Labial- oder Buccalseite des Gerüstes oder Zahnstumpf-Modells (22) im Überschuss aufgebrachte, ungebrannte keramische Masse (26) derart eingedrückt wird, dass die keramische Masse (26) das Keramik-Formteil (10) mindestens teilweise umhüllt und anschließend das Keramik-Formteil (10) zusammen mit dem Gerüst oder Zahnstumpf-Modell (22) gebrannt wird.

2. Verfahren nach Anspruch 1,
**dadurch gekennzeichnet, dass** mit Hilfe von weiterer Keramikmasse manuelle Korrekturen an dem Zahnersatz durchgeführt werden, bevor der Zahnersatz ein weiteres Mal gebrannt wird.

3. Verfahren nach Anspruch 1 oder 2,
**dadurch gekennzeichnet, dass** der Zahnersatz nach dem Brennen beschliefen und mit einer Glasur versehen sowie ein weiteres Mal gebrannt wird.

4. Verfahren nach einem der Ansprüche 1 bis 3,
**dadurch gekennzeichnet, dass** das Keramik-Formteil von einer einschichtigen, gebrannten Prefacette gebildet ist.

5. Verfahren nach einem der Ansprüche 1 bis 3,
**dadurch gekennzeichnet, dass** das Keramik-Formteil von einer wenigstens zweischichtigen, gebrannten Prefacette (10) gebildet ist, wobei eine der Labial- oder Buccalseite zugewandte Schicht aus Schneidenmaterial (12) und eine der Lingualseite zugewandte Schicht (14) aus Dentinmaterial gebildet ist.

6. Verfahren nach einem der Ansprüche 1 bis 3,
**dadurch gekennzeichnet, dass** das Keramik-Formteil von einer wenigstens zweischichtigen, transluzenten Keramikschale gebildet ist.

7. Verfahren nach einem der Ansprüche 1 bis 6,
**dadurch gekennzeichnet, dass** auf das Gerüst oder Zahnstrumpf-Modell (22) ein Opaker aufgebrannt wird, bevor das Keramik-Formteil auf dem Gerüst oder Zahnstumpf-Modell (22) aufgebracht wird.

8. Verfahren nach Anspruch 7,
**dadurch gekennzeichnet, dass** die Schmelztemperatur des Opakers höher ist als die der keramischen Masse (26).

9. Verfahren nach einem der vorhergehenden Ansprüche,
**dadurch gekennzeichnet, dass** das Keramik-Formteil vor der inzisalen, der medialen und der distalen Kante einer Zahnkrone endet.

10. Verfahren nach Anspruch 9,
**dadurch gekennzeichnet, dass** die inzisalen, medialen und distalen Kanten der Zahnkrone in Keramik modelliert werden.

11. Verfahren nach einem der vorhergehenden Ansprüche,
**dadurch gekennzeichnet, dass** ein Satz vorgefertigter Keramik-Formteile bereitgestellt wird und dass der gewünschten Labial- oder Buccalseite von der Größe her entsprechende, jedoch nächst kleinere Keramik-Formteil ausgewählt und verwendet wird.

12. Verfahren nach einem der vorhergehenden Ansprüche,
**dadurch gekennzeichnet, dass** das Keramik-Formteil an seinen inzisalen, medialen und distalen Kanten spitz zulaufend ausgebildet ist.

13. Verfahren nach einem der vorhergehenden Ansprüche,
**dadurch gekennzeichnet, dass** das Keramik-Formteil, welches industriell vorgefertigt wird, zusammen mit der dieses umhüllenden keramischen Masse gebrannt wird.

14. Verfahren nach einem der vorhergehenden Ansprüche,
**dadurch gekennzeichnet, dass** das Keramik-Formteil in einer Anzahl unterschiedlicher Farbgebungen vorgefertigt ist und der erwünschten Farbgebung der Krone im Wesentlichen entspricht und insbesondere transluzenter und/oder heller als diese ist.

15. Verfahren nach einem der vorhergehenden Ansprüche,
**dadurch gekennzeichnet, dass** das Keramik-Formteil auf der Labial- bzw. Buccalseite 40 bis 90, insbesondere etwa 70% des Volumens des auf das Gerüst oder das Zahnstumpfmodell (22) aufzubringenden Materials einnimmt.

16. Verfahren nach einem der vorhergehenden Ansprüche,
**dadurch gekennzeichnet, dass** die keramische Masse eingefärbt ist.

17. Verfahren nach einem der vorhergehenden Ansprüche,
**dadurch gekennzeichnet, dass** die Innenseite des Keramik-Formteils eben ausgebildet ist und eine die Verbindung mit der keramischen Masse (26) gewährleistende Rautiefe aufweist.

18. Verfahren nach einem der vorhergehenden Ansprüche,
**dadurch gekennzeichnet, dass** das Keramik-Formteil in seiner Transluzenz dem natürlichen Zahn nachempfunden ist.

19. Zahnersatz, mit einem Keramik-Formteil, das über eine keramische Masse (26) auf ein Gerüst oder ein Zahnstumpfmodell (22) aufgebracht ist,
**dadurch gekennzeichnet, dass** das Keramik-Formteil in die auf der Labial- oder Buccalseite des Gerüstes oder Zahnstumpf-Modells (22) im Überschuss aufgebrachte, ungebrannte, keramische Masse (26) derart aufgedrückt ist, dass das Keramik-Formteil von der keramischen Masse (26) mindestens teilweise umhüllt ist, wobei das Keramik-Formteil zusammen mit dem Gerüst oder Zahnstumpf-Modell (22) brennbar ist.

20. Zahnersatz nach Anspruch 19,
**dadurch gekennzeichnet, dass** das Keramik-Formteil von einer einschichtigen, gebrannten Prefacette gebildet ist.

21. Zahnersatz nach Anspruch 19,
**dadurch gekennzeichnet, dass** das Keramik-Formteil von einer zweischichtigen, gebrannten Prefacette gebildet ist, wobei die labiale/buccale Schicht transluzenter als die linguale Schicht ist.

22. Zahnersatz nach Anspruch 21,
**dadurch gekennzeichnet, dass** die Prefacette im Cervicalbereich in einem Winkel von 15° bis 75° zur labialen Oberfläche des Zahns abgeschrägt und von Keramikmasse überdeckt ist.

## Claims

1. A method of producing a denture, in which a ceramic moulding (10) is applied by way of a ceramic compound (26) on to a framework or a tooth stump pattern (22), **characterised in that** the ceramic moulding (10) is pressed into an unfired ceramic compound (26), which is applied to excess on the labial or buccal side of the framework or tooth stump pattern (22), in such a way that the ceramic compound (26) at least partly envelopes the ceramic moulding (10) and subsequently the ceramic moulding (10) is fired together with the framework or the tooth stump pattern (22).

2. A method according to Claim 1, **characterised in that** manual corrections to the denture are carried out by means of additional ceramic compound before the denture is fired one more time.

3. A method according to Claim 1 or 2, **characterised in that**, after the firing, the denture is ground and provided with a glaze and is also fired one more time.

4. A method according to any one of Claims 1 to 3, **characterised in that** the ceramic moulding is formed by a single-layer fired prefacet.

5. A method according to any one of Claims 1 to 3, **characterised in that** the ceramic moulding is formed by an at least two-layer fired prefacet (10), wherein a layer facing the labial or buccal side is formed from incisor material (12) and a layer (14) facing the lingual side is formed from dentine material.

6. A method according to any one of Claims 1 to 3, **characterised in that** the ceramic moulding is formed by an at least two-layer translucent ceramic shell.

7. A method according to any one of Claims 1 to 6, **characterised in that** an opaquer is fired on to the framework or tooth stump pattern (22) before the ceramic moulding is applied to the framework or tooth stump pattern (22).

8. A method according to Claim 7, **characterised in that** the melting point of the opaquer is higher than that of the ceramic compound (26).

9. A method according to any one of the preceding Claims, **characterised in that** the ceramic moulding terminates before the incisal edge, the medial edge and the distal edge of a tooth crown.

10. A method according to Claim 9, **characterised in that** the incisal, medial and distal edges of the tooth crown are modelled in ceramic material.

11. A method according to any one of the preceding Claims, **characterised in that** a set of prefabricated ceramic mouldings is prepared and the next smaller ceramic moulding in respect of size corresponding to the desired labial or buccal side is selected and is used.

12. A method according to any one of the preceding Claims, **characterised in that** the ceramic moulding is designed to extend conically tapered at its incisal, medial and distal edges.

13. A method according to any one of the preceding Claims, **characterised in that** the ceramic moulding, which is prefabricated industrially, is fired together with the ceramic compound enveloping it.

14. A method according to any one of the preceding claims, **characterised in that** the ceramic moulding is prefabricated in a number of different colourings and corresponds substantially to the desired colouring of the crown and, in particular, is more translucent and/or lighter than the latter.

15. A method according to any one of the preceding Claims, **characterised in that** on the labial or buccal side the ceramic moulding occupies 40 to 90 %, in particular 70%, of the volume of the material to be applied to the framework or the tooth stump pattern (22).

16. A method according to any one of the preceding Claims, **characterised in that** the ceramic compound is dyed.

17. A method according to any one of the preceding Claims, **characterised in that** the inside of the ceramic moulding is designed to be smooth and has a peak-to-valley height ensuring the connection with ceramic compound (26).

18. A method according to any one of the preceding Claims, **characterised in that** the ceramic moulding is adapted in its translucency to that of a natural tooth.

19. A denture with a ceramic moulding which is applied by way of a ceramic compound (26) on to a framework or a tooth stump pattern (22), **characterised in that** the ceramic moulding is pressed into the unfired ceramic compound (26), which is applied to excess on the labial or buccal side of the framework or tooth stump pattern (22), in such a way that the ceramic moulding is at least partly enveloped by the ceramic compound (26), wherein the ceramic moulding can be fired together with the framework or the tooth stump pattern (22).

20. A denture according to Claim 19, **characterised in that** the ceramic moulding is formed by a single-layer fired prefacet.

21. A denture according to Claim 19, **characterised in that** the ceramic moulding is formed by a two-layer fired prefacet, wherein the labial/buccal layer is more translucent than the lingual layer.

22. A denture according to Claim 21, **characterised in that** in the cervical region the prefacet is bevelled with respect to the labial surface of the tooth at an angle of 15° to 75° and is overcoated with ceramic compound.

## Revendications

1. Procédé de fabrication de prothèse dentaire, dans lequel un élément moulé en céramique (10) est déposé au moyen d'une pâte céramique (26) sur une armature ou un modèle de moignon de dent (22), **caractérisé en ce que** l'élément moulé en céramique (10) est comprimé dans une pâte céramique (26) non cuite déposée en excès du côté labial ou buccal de l'armature ou du modèle de moignon de dent (22) de telle façon que la pâte céramique (26) enrobe au moins en partie l'élément moulé en céramique (10) et ensuite l'élément moulé en céramique (10) est cuit ensemble avec l'armature ou le modèle de moignon de dent (22).

2. Procédé selon la revendication 1, **caractérisé en ce que** des corrections manuelles sont apportées à la prothèse dentaire à l'aide de pâte céramique supplémentaire avant que la prothèse dentaire soit cuite encore une fois.

3. Procédé selon la revendication 1 ou la revendication 2, **caractérisé en ce que** la prothèse dentaire est poncée après la cuisson et munie d'un émaillage ainsi que cuite encore une fois.

4. Procédé selon l'une des revendications 1 à 3, **caractérisé en ce que** l'élément moulé en céramique est formé par une pré-facette monocouche cuite.

5. Procédé selon l'une des revendications 1 à 3, **caractérisé en ce que** l'élément moulé en céramique est formé par une pré-facette au moins bicouche cuite (10), une couche dirigée vers le côté labial ou buccal étant faite d'un matériau d'incisive (12) et une couche dirigée vers le côté lingual (14) étant faite de matériau de dentine.

6. Procédé selon l'une des revendications 1 à 3, **caractérisé en ce que** l'élément moulé en céramique est formé par une coquille en céramique translucide au moins bicouche.

7. Procédé selon l'une des revendications 1 à 6, **caractérisé en ce qu'**un opaqueur est cuit sur l'armature ou le modèle de moignon de dent (22) avant que l'élément moulé en céramique soit déposé sur l'armature ou le modèle de moignon de dent (22).

8. Procédé selon la revendication 7, **caractérisé en ce que** la température de fusion de l'opaqueur est supérieure à celle de la pâte céramique (26).

9. Procédé selon l'une des revendications précédentes, **caractérisé en ce que** l'élément moulé en céramique se termine avant le bord incisif, le bord médial et le bord distal d'une couronne dentaire.

10. Procédé selon la revendication 9, **caractérisé en ce que** les bords incisif, médial et distal d'une couronne dentaire sont modelés en céramique.

11. Procédé selon l'une des revendications précédentes, **caractérisé en ce que** l'on prépare un ensemble d'éléments moulés en céramique préfabriqués et **en ce que** l'on choisit et on utilise l'élément moulé en céramique dont la taille correspond au côté labial ou buccal mais en prenant celui de taille immédiatement plus petite.

12. Procédé selon l'une des revendications précédentes, **caractérisé en ce que** l'élément moulé en céramique est réalisé avec une forme qui se termine en pointe au niveau de ses bords incisif, médial et distal.

13. Procédé selon l'une des revendications précédentes, **caractérisé en ce que** l'élément moulé en céramique, qui est préfabriqué industriellement, est cuit ensemble avec la pâte céramique qui l'enrobe.

14. Procédé selon l'une des revendications précédentes, **caractérisé en ce que** l'élément moulé en céramique est préfabriqué en plusieurs teintes différentes et correspond pratiquement à la teinte voulue pour la couronne, en particulier est plus translucide et/ou plus clair que cette dernière.

15. Procédé selon l'une des revendications précédentes, **caractérisé en ce que** l'élément moulé en céramique côté labial ou buccal occupe 40 à 90, en particulier environ 70% du volume du matériau à déposer sur l'armature ou le modèle de moignon de dent (22).

16. Procédé selon l'une des revendications précédentes, **caractérisé en ce que** la pâte céramique est teintée dans la masse.

17. Procédé selon l'une des revendications précédentes, **caractérisé en ce que** la face interne de l'élément moulé en céramique est plane et présente une rugosité qui garantit la liaison avec la pâte céramique (26).

18. Procédé selon l'une des revendications précédentes, **caractérisé en ce que** l'élément moulé en céramique a une translucidité qui s'inspire de celle de la dent naturelle.

19. Prothèse dentaire, avec un élément moulé en céramique qui est déposé au moyen d'une pâte céramique (26) sur une armature ou un modèle de moignon de dent (22), **caractérisée en ce que** l'élément moulé en céramique est comprimé dans la pâte céramique (26) non cuite déposée en excès du côté labial ou buccal de l'armature ou du modèle de moignon de dents (22) de telle façon que l'élément moulé en céramique est enrobé au moins en partie par la pâte céramique (26), l'élément moulé en céramique pouvant être cuit ensemble avec l'armature ou le modèle de moignon de dent (22).

20. Prothèse dentaire selon la revendication 19, **caractérisée en ce que** l'élément moulé en céramique est formé par une pré-facette monocouche cuite.

21. Prothèse dentaire selon la revendication 19, **caractérisée en ce que** l'élément moulé en céramique est formé par une pré-facette bicouche cuite, la couche labiale/ buccale étant plus translucide que la couche linguale.

22. Prothèse dentaire selon la revendication 21, **caractérisée en ce que** la pré-facette est chanfreinée dans la zone cervicale selon un angle de 15° à 75° par rapport à la surface labiale de la dent et est recouverte par de la pâte céramique.
